(19) Europäisches Patentamt
European Patent Office
Office européen des brevets

(11) EP 1 605 442 A1

(12) **EUROPEAN PATENT APPLICATION**
published in accordance with Art. 158(3) EPC

(43) Date of publication:
**14.12.2005 Bulletin 2005/50**

(21) Application number: **03816360.6**

(22) Date of filing: **17.03.2003**

(51) Int Cl.[7]: **G11B 5/738**, G11B 5/66, G11B 5/851, G11B 5/65

(86) International application number:
**PCT/JP2003/003177**

(87) International publication number:
**WO 2004/084194 (30.09.2004 Gazette 2004/40)**

(84) Designated Contracting States:
**AT BE BG CH CY CZ DE DK EE ES FI FR GB GR HU IE IT LI LU MC NL PT RO SE SI SK TR**

(71) Applicant: **FUJITSU LIMITED**
**Kawasaki-shi, Kanagawa 211-8588 (JP)**

(72) Inventors:
- **MURAO, Reiko, YAMAGATA FUJITSU LIMITED**
**Higashine-shi, Yamagata 999-3701 (JP)**
- **GOUKE, Takashi, YAMAGATA FUJITSU LIMITED**
**Higashine-shi, Yamagata 999-3701 (JP)**
- **KAITSU, Isatake, YAMAGATA FUJITSU LIMITED**
**Higashine-shi, Yamagata 999-3701 (JP)**
- **KIKUCHI, Akira, YAMAGATA FUJITSU LIMITED**
**Higashine-shi, Yamagata 999-3701 (JP)**

(74) Representative: **Stebbing, Timothy Charles**
**Haseltine Lake & Co.,**
**Imperial House,**
**15-19 Kingsway**
**London WC2B 6UD (GB)**

(54) **MAGNETIC RECORDING MEDIUM AND ITS PRODUCTION METHOD**

(57) Disclosed herein is a magnetic recording medium including a ferromagnetic layer made of a Co-based alloy material, a nonmagnetic coupling layer formed on the ferromagnetic layer and made of Ru or a Ru-based alloy material, and a magnetic recording layer formed on the nonmagnetic coupling layer and made of a Co-based alloy material. The nonmagnetic coupling layer is formed by sputtering in an atmosphere of Ar-$N_2$ mixed gas; so that the nonmagnetic coupling layer contains nitrogen. The partial pressure of nitrogen during the sputtering is set in the range of $6.7 \times 10^{-3}$ to $3.7 \times 10^{-2}$ Pa.

FIG.1

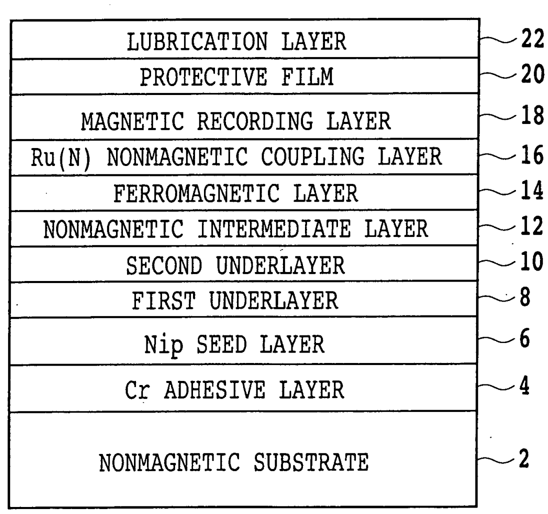


EP 1 605 442 A1

## Description

### Technical Field

The present invention relates to a magnetic recording medium suitable for high-density recording and also to a manufacturing method for such a magnetic recording medium.

### Background Art

With the development of the information processing technology, the demand for higher-density recording is increasing to a magnetic disk drive for use as an external storage for a computer. The characteristics required for a magnetic recording medium to meet the above demand include higher S/Nm (signal-to-medium noise ratio) of the magnetic recording medium and an improvement in thermal stability. For a reduction in medium noise, it is necessary to reduce the size of magnetic grains forming a magnetic layer and to weaken the magnetic interaction between the magnetic grains.

There has been reported a method of adding Ta, Nb, B, P, etc. to CoCr alloy forming a magnetic recording layer as a method of reducing the grain size of the magnetic grains. Further, it is general to add Pt to the CoCr alloy of the magnetic recording layer, so as to obtain a high coercivity (Hc). It is also possible to form a magnetic recording layer having a low tMr (Mr: remanent magnetization) and a high coercivity (Hc) by adding Cu to the CoCr alloy. It is known that it is effective in weakening the magnetic interaction between the magnetic grains to increase the Cr content in the CoCr alloy forming the magnetic recording layer and to also increase the boron (B) content in the CoCr alloy, thereby forming grain boundaries to isolate the magnetic grains from each other.

An improvement in the in-plane orientation of the C-axis as the axis of easy magnetization in the magnetic recording layer also contributes to a reduction in the medium noise. Further, there have already been reported a technique of using an underlayer made of a suitable Cr alloy having a crystal lattice size near that of the CoCr alloy forming the magnetic recording layer, and a technique of forming an intermediate layer between the magnetic recording layer and the underlayer wherein the intermediate layer is made of a Co-based alloy having better in-plane orientation characteristics than those of the magnetic recording layer (S. Ohkijima et al., Digest of IEEE - Inter - Mag., AB - 03, 1997).

It is known that in an in-plane magnetic recording medium the pulse width Pw50 of a regenerated waveform and the static magnetic characteristics of the medium, i.e., the coercivity Hc, the residual magnetization Mr, and the magnetic layer thickness t, are related to each other as follows:

$$a \propto (t \times Mr/Hc)^{1/2}$$

$$Pw50 = (2(a+d)^2+(a/2)^2)^{1/2}$$

where d represents a magnetic spacing. Basically, the smaller the pulse width, the more the resolution of a regenerated signal is improved. Accordingly, a high-density recording medium is desired to have a larger coercivity force with a thinner magnetic film thickness.

However, when the grain size reduction and isolation of the magnetic grains are advanced, there arises a problem of signal degradation due to demagnetizing field and thermal activation increasing according to the linear density of a recorded signal. As a general method for improving the thermal stability, a method of increasing an anisotropic magnetic field (Hk) has been adopted. However, if the anisotropic magnetic field (Hk) is excessively increased, the intensity of a write magnetic field of a magnetic head required for magnetization reversal of the magnetic grains becomes large, so that the write performance of the magnetic head may become lacking.

As another method for improving the thermal stability, a keeper magnetic recording medium has now been proposed. This medium includes a keeper layer, which is a soft magnetic layer whose magnetization direction is parallel to that of a magnetic layer (magnetic recording layer). This soft magnetic layer is formed above or below the magnetic layer. In many cases, a Cr magnetic insulating layer is provided between the soft magnetic layer and the magnetic layer. The soft magnetic layer decreases the demagnetizing field of bits written in the magnetic layer. However, the purpose of decoupling of grains in the magnetic layer is not attained because of the soft magnetic layer continuously exchange-coupled to the magnetic recording layer. As a result, the medium noise is increased.

In Japanese Patent Laid-Open No. 2001-56924, there has been proposed a magnetic recording medium including at least one exchange layer structure and a magnetic recording layer provided on the exchange layer structure, wherein the exchange layer structure includes a ferromagnetic layer and a nonmagnetic coupling layer formed on the ferromagnetic layer, and the magnetization direction in the ferromagnetic layer is antiparallel to that in the magnetic recording layer. When a recording magnetic field is externally applied to this magnetic recording medium, the magnetization direction in the magnetic recording layer and the magnetization direction in the ferromagnetic layer become parallel to each other. Thereafter, in a residual magnetized condition where the recording magnetic field is not applied, the magnetization direction in the ferromagnetic layer is inverted to become antiparallel to the magnetization direction in the magnetic recording layer. By the inversion of the magnetization direction in the ferromagnetic layer, the apparent film thickness can be increased as a whole. Accordingly, the thermal stability of recorded bits can be improved and the medium noise can be reduced without any adverse effects on the performance of the magnetic recording medium, thus realizing a magnetic recording medium which can perform reliable high-density recording.

As a method for improving the thermal stability and reducing the medium noise, the use of the above-mentioned exchange layer structure is effective. To improve the thermal stability in the magnetic recording medium having the exchange layer structure, it is desirable that an exchange coupling field for making the magnetization direction in the magnetic recording layer and the magnetization direction in the ferromagnetic layer antiparallel to each other is produced with a sufficient intensity.

[Patent Document 1]

Japanese Patent Laid-Open No. 2001-56922

[Patent Document 2]

Japanese Patent Laid-Open No. 2001-56924

**Disclosure of the Invention**

It is therefore an object of the present invention to provide a magnetic recording medium which can increase an exchange coupling force between a magnetic recording layer and a ferromagnetic layer to further improve the thermal stability of recorded bits, thereby realizing reliable high-density recording.

In accordance with an aspect of the present invention, there is provided a magnetic recording medium including a ferromagnetic layer made of a Co-based alloy material; a nonmagnetic coupling layer formed on the ferromagnetic layer and made of Ru or a Ru-based alloy material; and a magnetic recording layer formed on the nonmagnetic coupling layer and made of a Co-based alloy material; the nonmagnetic coupling layer containing nitrogen.

The nonmagnetic coupling layer is formed by sputtering in an atmosphere of Ar-$N_2$ mixed gas, and the partial pressure of nitrogen gas during the sputtering is set in the range of $6.7 \times 10^{-3}$ to $3.7 \times 10^{-2}$ Pa. Preferably, the magnetic recording layer includes at least one Co-based alloy layer containing Co as a principal component and at least one element selected from the group consisting of Cr, Pt, B, and Cu. Preferably, the ferromagnetic layer contains Co as a principal component and at least one element selected from the group consisting of Cr, Pt, and B.

In accordance with another aspect of the present invention, there is provided a magnetic recording medium including a nonmagnetic substrate; an underlayer formed on the nonmagnetic substrate; a nonmagnetic intermediate layer formed on the underlayer; a ferromagnetic layer formed on the nonmagnetic intermediate layer and made of a Co-based alloy material; a nonmagnetic coupling layer formed on the ferromagnetic layer and made of Ru or a Ru-based alloy material; and a magnetic recording layer formed on the nonmagnetic coupling layer and made of a Co-based alloy material; the nonmagnetic coupling layer containing nitrogen.

The nonmagnetic coupling layer is formed by sputtering in an atmosphere of Ar-$N_2$ mixed gas, and the partial pressure of nitrogen gas during the sputtering is set in the range of $6.7 \times 10^{-3}$ to $3.7 \times 10^{-2}$ Pa. Preferably, the underlayer includes a first underlayer formed of Cr and a second underlayer provided on the first base layer and formed of a Cr-based alloy material containing Cr as a principal component and at least one element selected from the group consisting of Mo, Ta, Ti, W, and V.

In accordance with a further aspect of the present invention, there is provided a manufacturing method for a magnetic recording medium, including the steps of forming an underlayer on a substrate by sputtering; forming a nonmagnetic intermediate layer on the underlayer by sputtering; forming a ferromagnetic layer of a Co-based alloy material on the nonmagnetic intermediate layer by sputtering; forming a nonmagnetic coupling layer of Ru or a Ru-based alloy material on the ferromagnetic layer by sputtering in an atmosphere of Ar-$N_2$ mixed gas; and forming a magnetic recording layer of a Co-based alloy material on the nonmagnetic coupling layer by sputtering.

Preferably, the partial pressure of nitrogen gas during the sputtering in forming the nonmagnetic coupling layer is set in the range of $6.7 \times 10^{-3}$ to $3.7 \times 10^{-2}$ Pa.

**Brief Description of the Drawings**

FIG. 1 is a schematic sectional diagram showing the configuration of a magnetic recording medium according to a preferred embodiment of the present invention;

FIG. 2 is a flowchart showing a manufacturing method for a magnetic recording medium according to the present invention;

FIG. 3 is a graph showing the dependence of exchange coupling field upon the partial pressure of nitrogen gas in forming the exchange coupling layer;

FIG. 4 is a graph showing the dependence of coercivity of the magnetic recording layer upon the partial pressure of nitrogen gas in forming the exchange coupling layer; and

FIG. 5 is a graph showing the dependence of S/Nm at a recording density of 307 kFCI upon the partial pressure of nitrogen gas in forming the exchange coupling layer.

## Best Mode for Carrying out the Invention

Referring to FIG. 1, there is shown a schematic sectional diagram showing the configuration of a magnetic recording medium according to a preferred embodiment of the present invention. The magnetic recording medium has a sectional structure obtained by laminating a nonmagnetic substrate 2, Cr adhesive layer 4, NiP seed layer 6, first underlayer 8, second underlayer 10, nonmagnetic intermediate layer 12, ferromagnetic layer 14, Ru nonmagnetic coupling layer 16 containing N, magnetic recording layer 18, protective layer 20, and lubrication layer 22 in this order.

The nonmagnetic substrate 2 is formed of Al, Al alloy, or glass, for example. The nonmagnetic substrate 2 may be textured or untextured. The Cr adhesive layer 4 having a thickness of 25 nm is formed on the nonmagnetic substrate 2. The NiP seed layer 6 having a thickness of 25 nm is formed on the Cr adhesive layer 4. The first underlayer 8 having a thickness of 4 nm is formed on the NiP seed layer 6. The first underlayer 8 is made of Cr. The second underlayer 10 having a thickness of 3 nm is formed on the first underlayer 8. The second underlayer 10 is formed of CrMo. The material of the second underlayer 10 is not limited to CrMo, but may be a Cr-based alloy containing Cr as a principal component and at least one element selected from the group consisting of Mo, Ta, Ti, W, and V.

The nonmagnetic intermediate layer 12 having a thickness of 1 nm is formed on the second base layer 10. The nonmagnetic intermediate layer 12 is formed of CoCrTa. The nonmagnetic intermediate layer 12 is provided to promote the epitaxial growth of the magnetic recording layer 18, the decrease in range of grain size distribution in the magnetic recording layer 18, and the orientation of the axis of easy magnetization in the magnetic recording layer 18 parallel to the surface of the magnetic recording medium. The ferromagnetic layer 14 having a thickness of 3 nm is formed on the nonmagnetic intermediate layer 12. The ferromagnetic layer 14 is made of CoCrPtB. The material of the ferromagnetic layer 14 is not limited to CoCrPtB, but may be a Co-based alloy containing Co as a principal component and at least one element selected from the group consisting of Cr, Pt, and B.

The nonmagnetic exchange coupling layer 16 having a thickness of 0.8 nm is formed on the ferromagnetic layer 14. The nonmagnetic exchange coupling layer 16 is formed of Ru. The Ru nonmagnetic exchange coupling layer 16 is formed by sputtering in an atmosphere of Ar-$N_2$ mixed gas. Accordingly, the Ru film deposited by this sputtering contains a minute amount of nitrogen (N). The magnetic recording layer 18 having a thickness of 17 nm is formed on the Ru(N) nonmagnetic exchange coupling layer 16. The magnetic recording layer 18 is made of CoCrPtBCu. The material of the magnetic recording layer 18 is not limited to CoCrPtBCu, but may be a Co-based alloy containing Co as a principal component and at least one element selected from the group consisting of Cr, Pt, B, and Cu. It is needless to say that the magnetic recording layer 18 is not limited to a single layer, but may be composed of multiple layers. The protective layer 20 having a thickness of 5 nm is formed on the magnetic recording layer 18. The lubrication layer 22 is formed on the protective layer 20, so as to lubricate the recording surface of the magnetic recording medium. This lubrication layer 22 is formed of an organic lubricant.

FIG. 2 shows a manufacturing method for the above-mentioned magnetic recording medium. In step S10, a sputtering chamber is vacuumed to $4 \times 10^{-5}$ Pa or less. In step S11, the substrate 2 is heated to 220°C. Thereafter, Ar gas is introduced into the sputtering chamber to hold the pressure in the sputtering chamber at 0.67 Pa. In this condition, the Cr adhesive layer 4 is formed on the substrate 2 (step S12), and the NiP seed layer 6 is next formed on the Cr adhesive layer 4 (step S13).

In step S14, the substrate 2 is heated to 260°C. Thereafter, the first and second base layers 8 and 10 are formed (step S15). The CoCrTa nonmagnetic intermediate layer 12 is formed on the second base layer 10 (step S16), and the CoCrPtB ferromagnetic layer 14 is next formed on the nonmagnetic intermediate layer 12 (step S17). In the next step, the Ar-$N_2$ mixed gas is introduced into the sputtering chamber to form the Ru(N) nonmagnetic exchange coupling layer 16 having a thickness of 0.8 nm (step S18). Samples were prepared with changing the partial pressure of the nitrogen gas at step S18 to clarify the dependence of exchange coupling field (Hex), coercivity (Hc), and S/Nm upon this partial pressure.

In the next step, Ar gas is introduced into the sputtering chamber to form the CoCrPtBCu magnetic recording layer 16 having a thickness of 17 nm (step S19) and next form the protective layer 20 having a thickness of 5 nm (step S20). Finally, the substrate 2 is removed from the sputtering chamber, and an organic lubricant is applied to the protective layer 20 to form the lubrication layer 22 (step S21).

FIG. 3 shows the dependence of exchange coupling field (Hex) upon the partial pressure of nitrogen gas in forming the exchange coupling layer 16. As apparent from FIG. 3, the exchange coupling field (Hex) in the case of adding nitrogen to the exchange coupling layer is larger than that in the case of not adding nitrogen to the exchange coupling layer, and the exchange coupling field (Hex) increases with an increase in the partial pressure of nitrogen gas.

FIG. 4 shows the dependence of coercivity (Hc) of the magnetic recording layer 18 upon the partial pressure of nitrogen gas in forming the exchange coupling layer 16. As understood from FIG. 4, the coercivity tends to decrease with an increase in the partial pressure of nitrogen gas, and a desired coercivity of not less than 3000 oersteds (Oe) or not less than 3000 × n/4 (kA/m) is obtained in the range of not more than 3.7 × $10^{-2}$ Pa for the partial pressure of nitrogen gas. However, the loss of coercivity due to the addition of nitrogen can be compensated by optimizing the material of the magnetic recording layer 18.

FIG. 5 shows the dependence of signal-to-medium noise ratio (S/Nm) at a recording density of 307 kFCI upon the partial pressure of nitrogen gas in forming the exchange coupling layer 16. As apparent from FIG. 5, the S/Nm is more improved with an increase in the partial pressure of nitrogen gas as compared with the case of not adding nitrogen to the exchange coupling layer, and a desired S/Nm of not less than 14.5 dB can be obtained in the range of not less than 6.7 × $10^{-3}$ Pa for the partial pressure of nitrogen gas. As understood from the test results shown in FIGS. 4 and 5, the partial pressure of nitrogen gas in forming the nonmagnetic exchange coupling layer 16 is preferably set in the range of 6.7 × $10^{-3}$ to 3.7 × $10^{-2}$ Pa.

## Industrial Applicability

According to the present invention, it is possible to provide a magnetic recording medium which can increase an exchange coupling force between a magnetic recording layer and a ferromagnetic layer to improve the thermal stability of recorded bits, thereby obtaining a high S/Nm.

## Claims

**1.** A magnetic recording medium comprising:

a ferromagnetic layer made of a Co-based alloy material;
a nonmagnetic coupling layer formed on said ferromagnetic layer and made of Ru or a Ru-based alloy material, said nonmagnetic coupling layer containing nitrogen; and
a magnetic recording layer formed on said nonmagnetic coupling layer and made of a Co-based alloy material.

**2.** The magnetic recording medium according to claim 1, wherein said nonmagnetic coupling layer is formed by sputtering in an atmosphere of Ar-$N_2$ mixed gas, and the partial pressure of nitrogen gas during the sputtering is set in the range of 6.7 × $10^{-3}$ to 3.7 × $10^{-2}$ Pa.

**3.** The magnetic recording medium according to claim 1, wherein said magnetic recording layer comprises at least one Co-based alloy layer containing Co as a principal component and at least one element selected from the group consisting of Cr, Pt, B, and Cu.

**4.** The magnetic recording medium according to claim 1, wherein said ferromagnetic layer contains Co as a principal component and at least one element selected from the group consisting of Cr, Pt, and B.

**5.** A magnetic recording medium comprising:

a nonmagnetic substrate;
an underlayer formed on said nonmagnetic substrate;
a nonmagnetic intermediate layer formed on said underlayer ;
a ferromagnetic layer formed on said nonmagnetic intermediate layer and made of a Co-based alloy material;
a nonmagnetic coupling layer formed on said ferromagnetic layer and made of Ru or a Ru-based alloy material, said nonmagnetic coupling layer containing nitrogen; and
a magnetic recording layer formed on said nonmagnetic coupling layer and made of a Co-based alloy material.

**6.** The magnetic recording medium according to claim 5, wherein said nonmagnetic coupling layer is formed by sputtering in an atmosphere of Ar-$N_2$ mixed gas, and the partial pressure of nitrogen gas during the sputtering is set in the range of 6.7 × $10^{-3}$ to 3.7 × $10^{-2}$ Pa.

**7.** The magnetic recording medium according to claim 5, wherein said underlayer comprises a first underlayer made of Cr and a second underlayer formed on said first underlayer and made of a Cr-based alloy material containing Cr as a principal component and at least one element selected from the group consisting of Mo, Ta, Ti, W, and V.

**8.** A manufacturing method for a magnetic recording medium, comprising the steps of:

forming an underlayer on a substrate by sputtering;
forming a nonmagnetic intermediate layer on said underlayer by sputtering;
forming a ferromagnetic layer of a Co-based alloy material on said nonmagnetic intermediate layer by sputtering;
forming a nonmagnetic coupling layer of Ru or a Ru-based alloy material on said ferromagnetic layer by sputtering in an atmosphere of Ar-$N_2$ mixed gas; and
forming a magnetic recording layer of a Co-based alloy material on said nonmagnetic coupling layer by sputtering.

**9.** The manufacturing method for a magnetic recording medium according to claim 8, wherein the partial pressure of nitrogen gas during the sputtering in forming said nonmagnetic coupling layer is set in the range of $6.7 \times 10^{-3}$ to $3.7 \times 10^{-2}$ Pa.

FIG.1

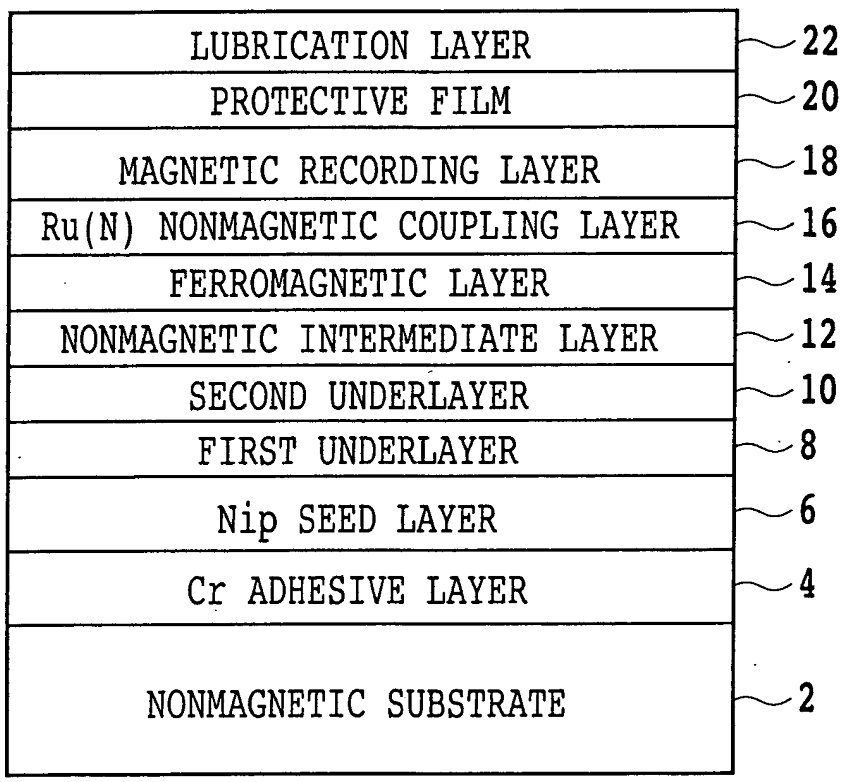
LUBRICATION LAYER
22
PROTECTIVE FILM
20
MAGNETIC RECORDING LAYER
18
Ru(N) NONMAGNETIC COUPLING LAYER
16
FERROMAGNETIC LAYER
14
NONMAGNETIC INTERMEDIATE LAYER
12
SECOND UNDERLAYER
10
FIRST UNDERLAYER
8
Nip SEED LAYER
6
Cr ADHESIVE LAYER
4
NONMAGNETIC SUBSTRATE
2

FIG.2

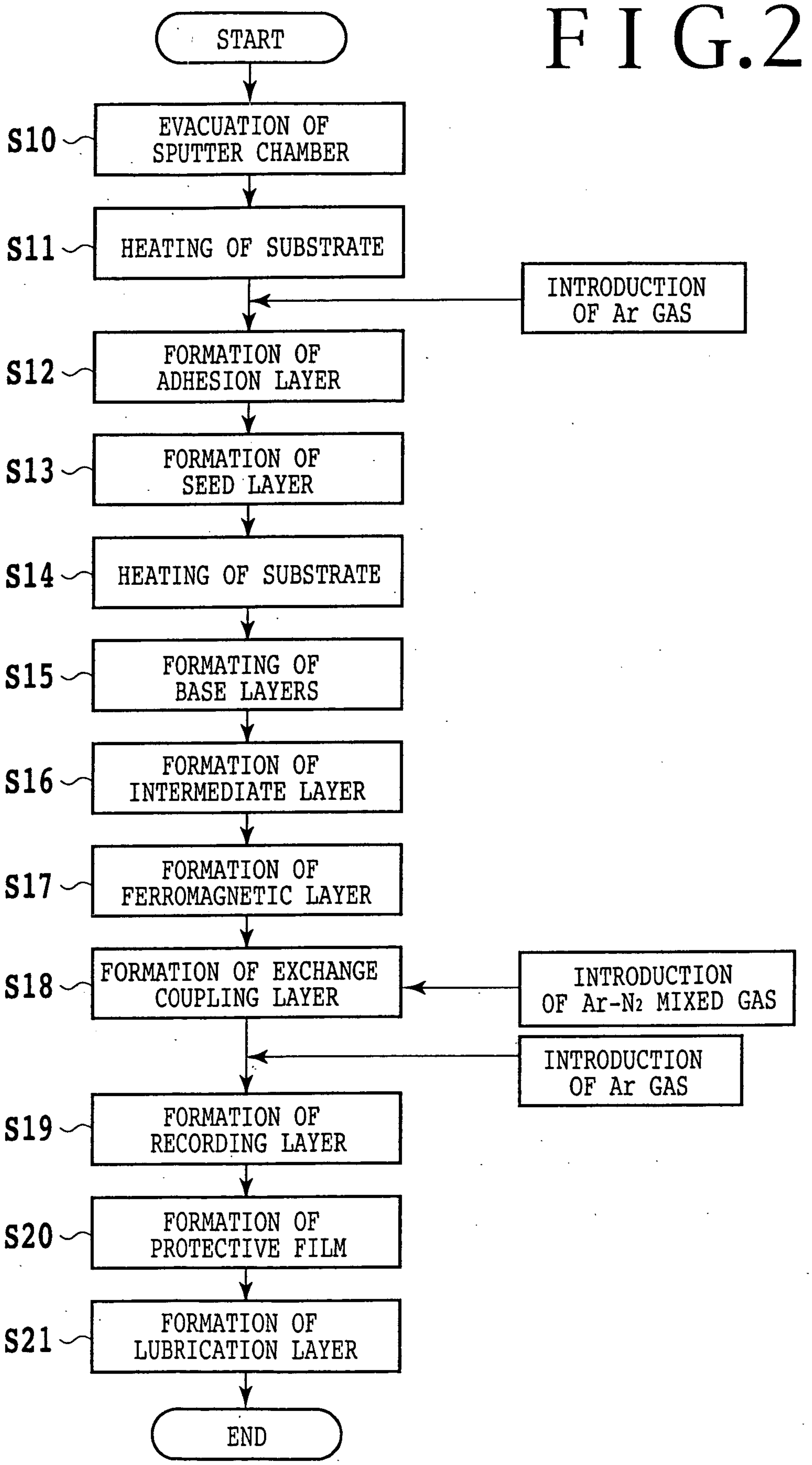
START
S10
EVACUATION OF SPUTTER CHAMBER
S11
HEATING OF SUBSTRATE
INTRODUCTION OF Ar GAS
S12
FORMATION OF ADHESION LAYER
S13
FORMATION OF SEED LAYER
S14
HEATING OF SUBSTRATE
S15
FORMATING OF BASE LAYERS
S16
FORMATION OF INTERMEDIATE LAYER
S17
FORMATION OF FERROMAGNETIC LAYER
S18
FORMATION OF EXCHANGE COUPLING LAYER
INTRODUCTION OF Ar-N2 MIXED GAS
INTRODUCTION OF Ar GAS
S19
FORMATION OF RECORDING LAYER
S20
FORMATION OF PROTECTIVE FILM
S21
FORMATION OF LUBRICATION LAYER
END

FIG.3

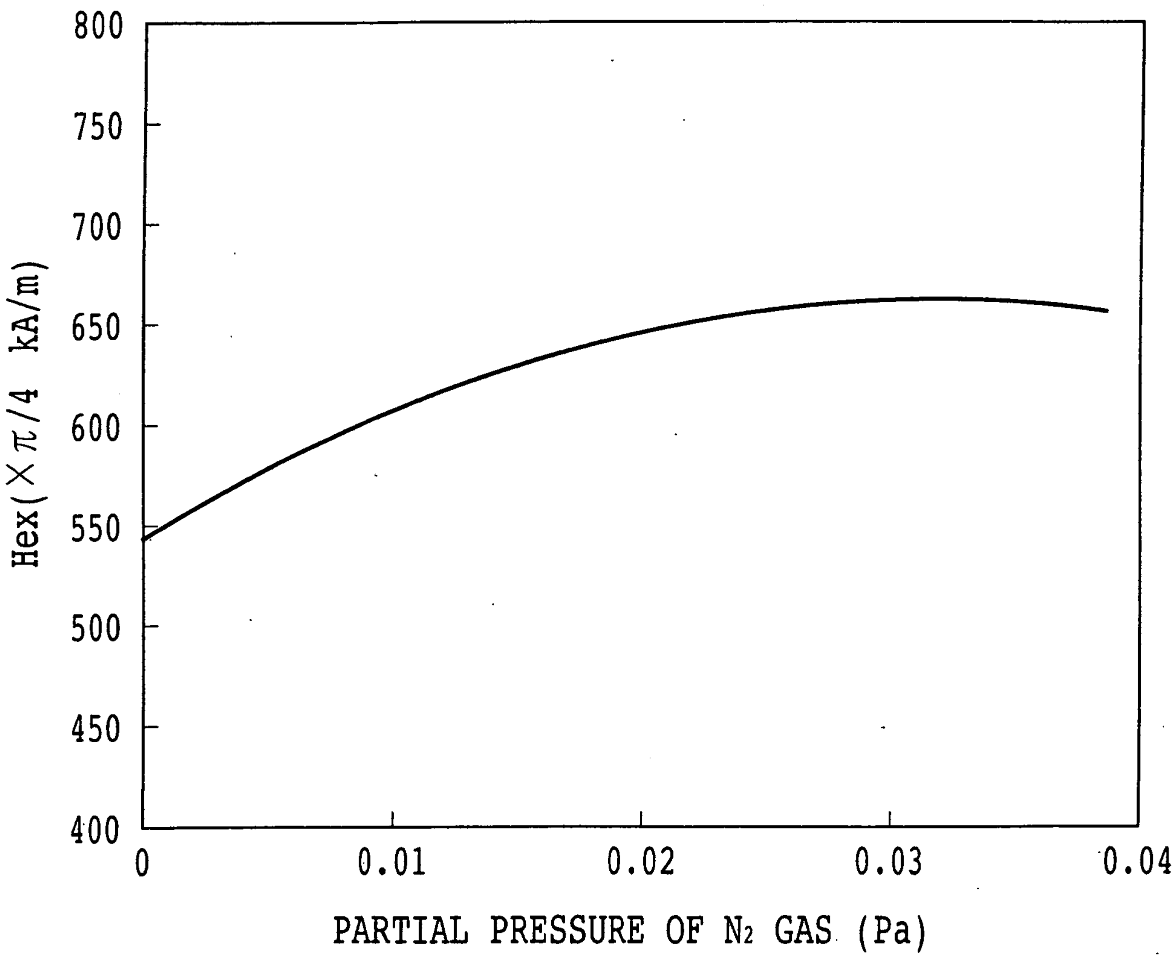
Hex(×π/4 kA/m)
800
750
700
650
600
550
500
450
400
0
0.01
0.02
0.03
0.04
PARTIAL PRESSURE OF N2 GAS (Pa)

# F I G.4

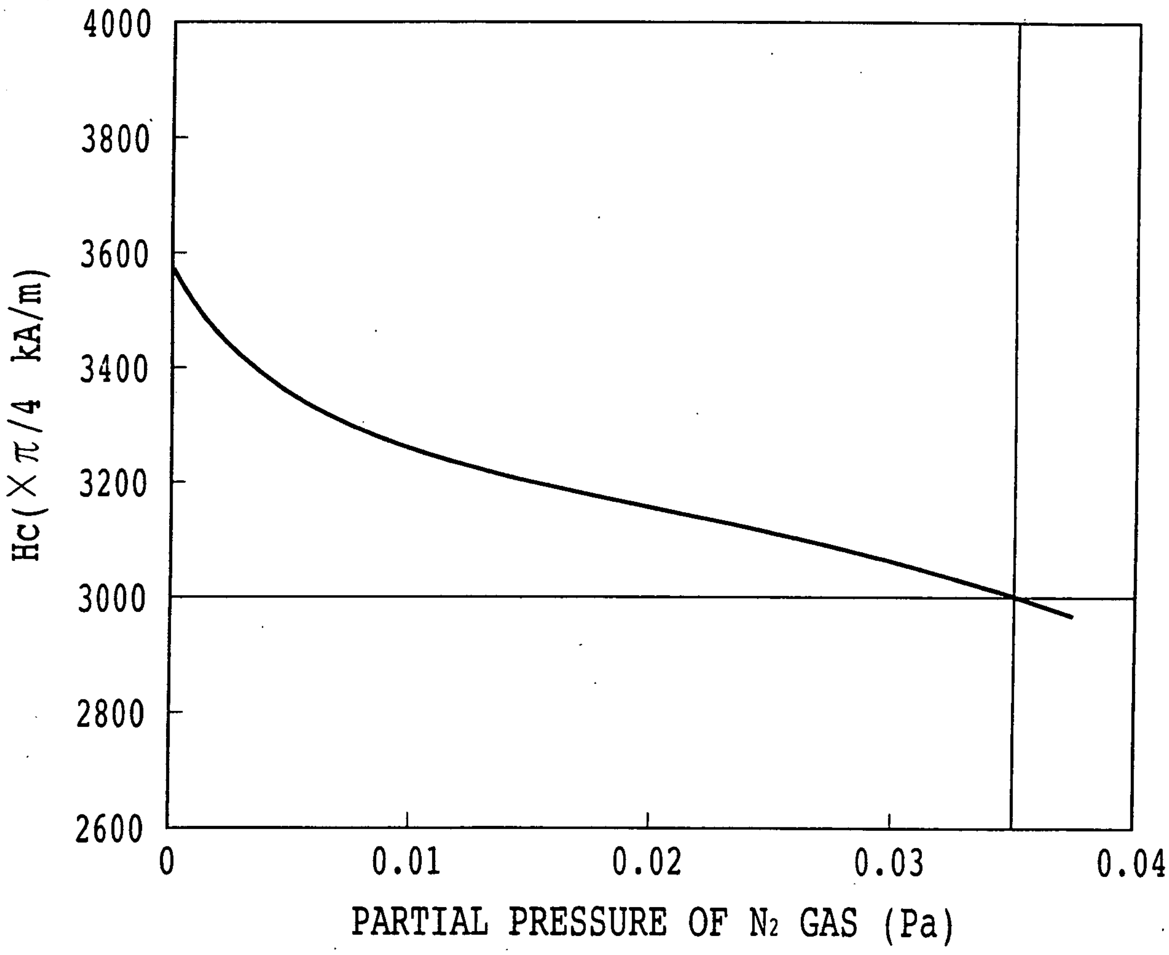
4000
3800
3600
3400
3200
3000
2800
2600
Hc(×π/4 kA/m)
0
0.01
0.02
0.03
0.04
PARTIAL PRESSURE OF N2 GAS (Pa)

# F I G.5

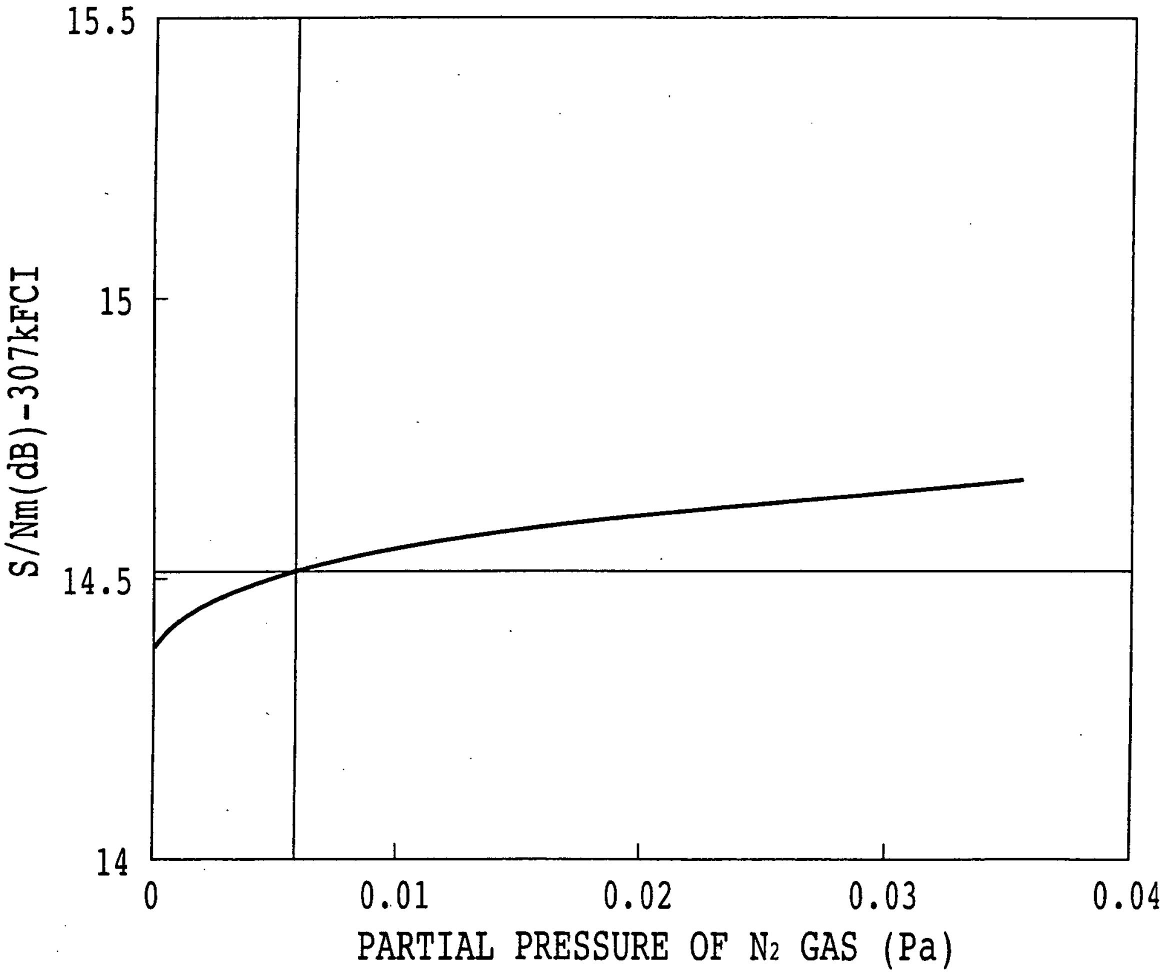
15.5
15
14.5
14
S/Nm(dB)-307kFCI
0
0.01
0.02
0.03
0.04
PARTIAL PRESSURE OF N2 GAS (Pa)

## INTERNATIONAL SEARCH REPORT

International application No.
PCT/JP03/03177

A. CLASSIFICATION OF SUBJECT MATTER
Int.Cl[7] G11B5/738, 5/66, 5/851, 5/65

According to International Patent Classification (IPC) or to both national classification and IPC

B. FIELDS SEARCHED
Minimum documentation searched (classification system followed by classification symbols)
Int.Cl[7] G11B5/62-5/858

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-260208 A (Showa Denko Kabushiki Kaisha), 13 September, 2002 (13.09.02), Full text; all drawings (Family: none) | 1-9 |
| A | JP 2002-260207 A (Showa Denko Kabushiki Kaisha), 13 September, 2002 (13.09.02), Full text; all drawings (Family: none) | 1-9 |
| A | JP 2002-260210 A (Showa Denko Kabushiki Kaisha), 13 September, 2002 (13.09.02), Full text; all drawings (Family: none) | 1-9 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 April, 2003 (22.04.03) | 06 May, 2003 (06.05.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

| International application No. |
|---|
| PCT/JP03/03177 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-133647 A (Showa Denko Kabushiki Kaisha), 10 May, 2002 (10.05.02), Par. No. [0032] (Family: none) | 1-9 |
| A | JP 2002-100030 A (Toshiba Corp.), 05 April, 2002 (05.04.02), Par. Nos. [0032] to [0035]; Fig. 2 (Family: none) | 1-9 |
| A | JP 2001-283428 A (Toshiba Corp.), 12 October, 2001 (12.10.01), Full text; all drawings (Family: none) | 1-9 |
| A | JP 2002-298323 A (Toshiba Corp.), 11 October, 2002 (11.10.02), Full text; all drawings (Family: none) | 1-9 |
| A | JP 2001-291230 A (Sony Corp.), 19 October, 2001 (19.10.01), Full text; all drawings (Family: none) | 1-9 |
| A | JP 59-142738 A (NEC Corp.), 16 August, 1984 (16.08.84), Page 2, upper right column; all drawings (Family: none) | 1-9 |
| A | JP 2003-16620 A (Toshiba Corp.), 17 January, 2003 (17.01.03), Par. No. [0273] (Family: none) | 1-9 |

Form PCT/ISA/210 (continuation of second sheet) (July 1998)